# EUROPÄISCHE PATENTSCHRIFT

(11) **EP 2 517 137 B1**
(45) Veröffentlichungstag und Bekanntmachung des Hinweises auf die Patenterteilung: **23.07.2014**
(21) Anmeldenummer: 10766297.5
(22) Anmeldetag: 21.10.2010
(51) Int. Cl.: G06F 21/00, H04L 29/06, H04L 12/24, H04L 12/28, G06F 21/31, H04L 29/08

(54) **Verfahren und Vorrichtung zur Sicherung der Kommunikation zwischen einem Heimautomatisierungsserver und einem zentralen Konfigurationsserver**
Method and device for securing a communication between a home automation server and a central configuration server
Procédé et dispositif de sécuriser une communication entre un serveur d'automatisation domotique et un serveur de configuration central

(30) Priorität: 22.12.2009 DE 102009060469
(43) Veröffentlichungstag der Anmeldung: 31.10.2012
(73) Patentinhaber: RWE Effizienz GmbH, 44139 Dortmund (DE); EQ-3 AG, 26789 Leer (DE)
(72) Erfinder: DANKE, Enno, 81373 München (DE); GROHMANN, Bernd, 26135 Oldenburg (DE)
(74) Vertreter: Cohausz & Florack
(86) Internationale Anmeldenummer: PCT/EP2010/065879
(87) Internationale Veröffentlichungsnummer: WO 2011/085832

(56) Entgegenhaltungen:
- EP-A1- 1 265 144
- EP-A2- 0 977 399
- WO-A1-2004/075477
- WO-A1-2007/014287
- WO-A1-2009/129821

## Beschreibung

Der Gegenstand betrifft ein Verfahren zur Erzeugung einer Zugriffsberechtigung auf einem Automatisierungsserver mittels eines zentralen Konfigurationsservers über ein Weitverkehrsnetz. Darüber hinaus betrifft der Gegenstand einen Heimautomatisierungsserver sowie einen zentralen Konfigurationsserver, als auch ein System mit solchen Servern.

Systeme zur Heimautomatisierung sind hinlänglich bekannt. So ist zum Beispiel unter der Bezeichnung EIB/KNX ein kabelgebundenes Heimautomatisierungssystem bekannt, bei dem über einen seriellen Bus Nachrichten zwischen Sensoren und Aktoren ausgetauscht werden und entsprechend vorgebbarer Regeln (Parameter) elektrische Verbraucher gesteuert werden. Ein solches Bussystem erfordert jedoch eine aufwendige Verkabelung, die fast ausschließlich im Neubau realisierbar ist.

Ein System zur Heimautomatisierung ist auch aus der Veröffentlichungsschrift WO-A1-2009/129821 bekannt.

Neben der Kommunikation untereinander, d.h. zwischen den Geräten (Aktoren, Sensoren) und dem Heimautomatisierungsserver(Heimautomatisierungsserver) ist auch die Kommunikation mit einem zentralen Konfigurationsserver vor Angriffen durch Dritte zu schützen. So muss sichergestellt werden, dass jeweils nur der aktuelle Besitzer des Heimautomatisierungsserver Zugriff auf den Heimautomatisierungsserver über ein Weitverkehrsnetz hat.

Daher lag dem Gegenstand die Aufgabe zugrunde, eine sichere Besitzbeziehung zwischen einem Heimautomatisierungsserver und einem Benutzer auf einem zentralen Konfigurationsserver zur Verfügung zustellen. Ferner war das Ziel, bei einem Besitzübergang des Heimautomatisierungsservers eine weiterhin sichere Kommunikation zwischen dem neuen Besitzer und dem Heimautomatisierungsserver zur Verfügung zu stellen.

Diese Aufgabe wird gegenständlich gemäß eines ersten Aspekts durch ein Verfahren zur Erzeugung einer Zugriffsberechtigung auf einen Heimautomatisierungsserver mittels eines zentralen Konfigurationsserver über ein Weitverkehrsnetz gelöst, welches umfasst Speichern zumindest eines ersten Tupels aus einer den Heimautomatisierungsserver eindeutig kennzeichnenden Kennung und einem Registrierungscode in dem zentralen Konfigurationsserver, Empfangen eines zweiten Tupels aus zumindest einer Kennung und einem Registrierungscode am zentralen Konfigurationsserver von einem Benutzer, Vergleichen des ersten Tupels mit dem zweiten Tupel durch den zentralen Konfigurationsserver, Speichern einer Besitzbeziehung zwischen dem Benutzer und dem Heimautomatisierungsserver bei einem positiven Vergleichsergebnis, derart, dass mittels der Besitzbeziehung eine Zugriffsberechtigung auf den Heimautomatisierungsserver über das Weitverkehrsnetz erzeugt wird.

Die Zugriffsberechtigung auf den Heimautomatisierungsserver über das Weitverkehrsnetz kann mittels des zentralen Konfigurationsservers oder des Heimautomatisierungsserver erzeugt werden, insbesondere durch Aussenden eines entsprechenden Befehls bei dem Vorliegen einer Zugriffsberechtigung und/oder durch Sperren der Kommunikation bei einem Fehlen der Zugriffsberechtigung. Die Zugriffsberechtigung (Authentifizierung) kann gegenüber dem Konfigurationsserver oder dem Heimautomatisierungsserver oder beiden erfolgen.

Wenn die Zugriffsberechtigung nur an einer Stelle gespeichert ist, kann die jeweils eine Stelle eine Authentifizierungsanfrage an die jeweils andere Stelle weiterleiten.

Die Besitzbeziehung zwischen dem Benutzer und dem Heimautomatisierungsserver kann in dem zentralen Konfigurationsrechner oder dem Heimautomatisierungsserver gespeichert werden.

Für eine einfache Inbetriebnahme eines Heimautomatisierungsservers (Smart Home Server SHC) soll der Nutzer des Heimautomatisierungsservers einfach, zum Beispiel über das Internet, zum Beispiels durch Anschluss an einen DSL-Router, eine Verbindung zwischen dem Heimautomatisierungsserver und einem zentralen Konfigurationsserver aufbauen können. Über diese Verbindung soll der Benutzer in einfachster Weise beispielsweise über eine Webseite, den Heimautomatisierungsserver konfigurieren können. Hierzu wird zwischen dem Heimautomatisierungsserver und dem zentralen Konfigurationsserver über das Internet eine Konfigurationsverbindung aufgebaut. Diese Verbindung kann beispielsweise über einen IP-Tunnel erfolgen. Auch ist es möglich, dass eine VPN-Verbindung zwischen dem Heimautomatisierungsserver und dem Konfigurationsserver aufgebaut wird.

Zum Einen muss die Verbindung als solche gesichert sein und zum Anderen muss auch der Zugriff des zentralen Konfigurationsservers auf den Heimautomatisierungsserver gesichert sein. Insbesondere vor dem Hintergrund, dass der Zugriff auf den Konfigurationsserver und von diesem dann auf den Heimautomatisierungsserver über ein Weitverkehrsnetz, beispielsweise das Internet erfolgt, ist von einem hohen Bedrohungspotential auszugehen, da ein Dritter versuchen kann, die Verbindung zu dem Heimautomatisierungsserver zu "kapern" um dann den Heimautomatisierungsserver zu konfigurieren.

Für eine Konfiguration über das Weitverkehrsnetz ist es daher notwendig, dass der Nutzer sich gegenüber dem zentralen Konfigurationsserver und/oder dem Heimautomatisierungsserver authentifiziert. Insbesondere bei einer Erstinstallation, oder bei dem Zurücksetzen des Heimautomatisierungsservers in den Auslieferungszustand, ist eine Anmeldung des Benutzers samt Heimautomatisierungsserver am zentralen Konfigurationsserver notwendig.

Gegenständlich ist vorgeschlagen, dass nur authentifizierten Nutzern die Verwendung und/oder Konfiguration des Heimautomatisierungsservers über das Weitverkehrsnetz mittels des Konfigurationsservers erlaubt sein soll. Hierzu ist es notwendig, dass zunächst eine Besitzbeziehung zwischen dem Benutzer und dem Heimautomatisierungsserver eingerichtet werden muss. Die Einrichtung erfolgt dabei bevorzugt im zentralen Konfigurationsserver. Die erfolgreiche Einrichtung einer Besitzbeziehung kann in dem zentralen Konfigurationsserver und/oder dem Heimautomatisierungsserver gespeichert werden. Mit Hilfe dieser Besitzbeziehung kann der Benutzer dann über den Konfigurationsserver auf den ihm zugeordneten Heimautomatisierungsserver zugreifen und Konfigurationen vornehmen.

Darüber hinaus soll es möglich sein, mittels der einmal eingerichteten Besitzbeziehung Nutzerprofile anzulegen, welche verschiedene Zugriffsmöglichkeiten und Restriktionen auf dem Heimautomatisierungsserver aufweisen können.

Es ist erkannt worden, dass für das Einrichten einer Besitzbeziehung eine Authentifizierung notwendig ist. Bei dieser Authentifizierung muss der Benutzer gegenständlich neben Wissen auch Besitz des Heimautomatisierungsserver gegenüber dem Konfigurationsserver nachweisen. Das bedeutet, dass gegenständlich zwei Faktoren für die Authentifizierung notwendig sind.

Ein Faktor ist ein Wissensfaktor. Gegenständlich ist dieser Wissensfaktor die den Heimautomatisierungsserver eindeutig kennzeichnende Kennung. Sobald ein Benutzer in Besitz eines Heimautomatisierungsservers gelangt ist, kann er diese Kennung erfahren und hat somit das Wissen erlangt. Für den ersten Besitzer des Heimautomatisierungsservers stellt der Faktor Wissen einen ausreichenden Schutz gegenüber Dritten dar. Bei der Weitergabe des Heimautomatisierungsservers ist dieses Wissen jedoch weiterhin bei dem vorherigen Benutzer als auch beim neuen Benutzer. Somit verteilt sich das Wissen auf alle Besitzer des Heimautomatisierungsservers. Das führt dazu, dass der Wissensfaktor keinen ausreichenden Schutz davor bietet, dass vorherige Besitzer des Heimautomatisierungsservers diesen nach einem Rücksetzen auf den Auslieferungszustand für sich autorisieren und der neue Besitzer die Autorisierung nicht mehr vornehmen kann.

Um auch bei einer Weitergabe des Heimautomatisierungsservers eine sichere Authentifizierung zu ermöglichen, ist es notwendig, dass neben dem Wissensfaktor ein Besitzfaktor verwendet wird. Gegenständlich ist der Besitzfaktor der Registrierungscode. Der Registrierungscode ist gegenständlich ein Code, der nur dem aktuellen Besitzer des Heimautomatisierungsservers bekanntgegeben wird. Das bedeutet, dass der Registrierungscode gegenständlich ausschließlich am Heimautomatisierungsserver dem aktuellen Besitzer angezeigt wird. Das heißt aber auch, dass der Registrierungscode sich verändert, insofern, dass dieser nur maximal bis zur Weitergabe des Heimautomatisierungsservers gleich bleibt und sich danach zwingend ändert. Somit wird spätestens bei der Weitergabe des Heimautomatisierungsservers der Besitzfaktor neu erzeugt, der alte Besitzer kennt diesen nicht mehr und nur der neue Besitzer kann sich erneut autorisieren.

Die Autorisierung bedingt eine Besitzbeziehung zwischen dem Benutzer und dem Heimautomatisierungsserver. Diese Besitzbeziehung kann über ein Passwort und einen Benutzernamen geschützt sein. Dem Passwort und dem Benutzername kann ein eindeutiger Kommunikationsschlüssel zugeordnet werden, mit dessen Hilfe die Kommunikation zwischen zentralem Kommunikationsserver und Heimautomatisierungsserver gesichert ist. Mittels des Benutzernamens und des Passwortes kann der Zugriff auf den Heimautomatisierungsserver über den Konfigurationsserver oder innerhalb eines lokalen Netzwerks in das der Heimautomatisierungsserver eingebunden ist, gesichert sein. Die Besitzbeziehung stellt sicher, dass ein Benutzer einen Zugriff auf den Heimautomatisierungsserver sichern kann, ohne dass ein Dritter einen unautorisierten Zugriff auf den Heimautomatisierungsserver vornehmen kann.

Gemäß einem vorteilhaften Ausführungsbeispiel wird vorgeschlagen, dass der Registrierungscode ein in dem Heimautomatisierungsserver erzeugter Zufallscode, z.B. in einem Trusted Platform Module, ist und dass das erste Tupel von dem Heimautomatisierungsserver an den zentralen Konfigurationsserver vorzugsweise verschlüsselt über das Weitverkehrsnetz übermittelt wird. Beispielsweise nach Herstellen der Spannungsversorgung des Heimautomatisierungsservers, wenn noch keine Besitzbeziehung besteht, oder nach Zurücksetzen des Heimautomatisierungsservers auf den Auslieferungszustand kann ein Zufallscode, beispielsweise ein Zeichencode, ein Zifferncode oder ein Zahlencode, erzeugt werden. Dies kann mit Hilfe eines Zufallsgenerators erfolgen.

Auch ist es möglich, dass der Registrierungscode im Konfigurationsserver erzeugt wird. Dies ist beispielsweise immer dann möglich, wenn ein Heimautomatisierungsserver gegenüber dem Konfigurationsserver über das Weitverkehrsnetz anzeigt, dass dieser auf den Auslieferungszustand zurückgesetzt wurde. Über einen gesicherten Kanal kann der Konfigurationsserver dann den dort erzeugten Registrierungscode an den Heimautomatisierungsserver übertragen. Die Art des Registrierungscodes als auch die Erzeugung des Registrierungscodes kann in dem Konfigurationsserver genauso sein, wie für den Heimautomatisierungsserver beschrieben.

Somit wird vorgeschlagen, dass der Registrierungscode ein in dem zentralen Konfigurationsserver erzeugter Zufallscode ist und dass der Registrierungscode von dem zentralen Konfigurationsserver an den Heimautomatisierungsserver über das Weitverkehrsnetz übermittelt wird. Auch ist es möglich, dass der Registrierungscode eine Kombination von in dem zentralen Konfigurationsserver und im Heimautomatisierungsserver erzeugten Zufallscodes ist und dass die Zufallscodes zwischen dem zentralen Konfigurationsserver und dem Heimautomatisierungsserver über das Weitverkehrsnetz ausgetauscht werden. In diesem Fall ist der Registrierungscode besonders sicher, da er sich aus zwei getrennt voneinander erzeugten Zufallscodes zusammensetzt.

Sobald ein neuer Registrierungscode erzeugt wurde, kann dieser zusammen mit der den Heimautomatisierungsserver eindeutig kennzeichnenden Kennung an den zentralen Konfigurationsserver übermittelt werden. Die Übertragung sollte ebenfalls gesichert sein, da ansonsten der Registrierungscode abgehört werden könnte. Diese Übertragung kann mittels fest in dem Heimautomatisierungsserver und dem Konfigurationsserver gespeicherten Schlüsseln gesichert werden. Die Verschlüsselung kann symmetrisch als auch asymmetrisch sein. Sobald der Konfigurationsserver ein solches Tupel empfängt, entschlüsselt und speichert er dieses ab.

Möchte ein Benutzer nun eine Besitzbeziehung mit dem Heimautomatisierungsserver etablieren, kann er zunächst die eindeutige Kennung mittels beispielsweise einer Benutzerschnittstelle über einen Browser (Webinterface) dem Konfigurationsserver mitteilen. Der Konfigurationsserver sucht in seinem Speicher die eindeutige Kennung und den zugehörigen Registrierungscode, der zuvor empfangen wurde.

Der Benutzer muss nun neben der eindeutigen Kennung auch den Registrierungscode eingeben. Da der Registrierungscode zumindest für jeden neuen Besitzer neu generiert wird, kann nur der aktuelle Besitzer den Registrierungscode kennen. Somit ist sichergestellt, dass ein vorheriger Besitzer keine neue Besitzbeziehung herstellen kann. Der neue Besitzer erfährt den Registrierungscode von dem Heimautomatisierungsserver und teilt diesen zusammen mit der Kennung dem zentralen Konfigurationsserver mit. Stimmen die Angaben des Benutzers mit den gespeicherten Angaben überein, so wird eine Besitzbeziehung zwischen dem Benutzer und dem Heimautomatisierungsserver hergestellt.

Diese Besitzbeziehung kann durch einen Benutzername und ein Passwort abgesichert werden. Nach erfolgreicher Eingabe des Registrierungscodes erfolgt die Authentifizierung nur noch durch Benutzername/Passwort - also durch Wissen des neuen Besitzers, dass der alte Besitzer nicht kennen kann. Mittels dieser Besitzbeziehung erfolgt eine Zugriffsberechtigung über den Konfigurationsserver auf den Heimautomatisierungsserver. Der Benutzer kann dann den Heimautomatisierungsserver mittels des Konfigurationsservers, beispielsweise mittels eines internetbasierten Dienstes, konfigurieren.

Der Registrierungscode kann gemäß einem vorteilhaften Ausführungsbeispiel dem Benutzer durch eine Anzeige am Heimautomatisierungsserver angezeigt werden. Die Anzeige kann ein Display sein. Die Anzeige kann ein 8-Ziffern 15-Segment Display sein. Die Anzeige kann auch ein TFT-Display sein. Die Anzeige kann auch ein OLED-Display sein. Eine solche oder auch andere Anzeigen ermöglichen die Wiedergabe des in dem Heimautomatisierungsserver erzeugten Registrierungscodes. Der aktuelle Besitzer kann über die Anzeige den Registrierungscode auslesen und zusammen mit der Kennung an den Konfigurationsserver übermitteln.

Wie bereits zuvor erläutert, wird gemäß einem vorteilhaften Ausführungsbeispiel vorgeschlagen, dass jeweils ein neuer Registrierungscode bei jedem Zurücksetzen des Heimautomatisierungsservers erzeugt wird und das hiermit gebildete erste Tupel von dem Heimautomatisierungsserver an den zentralen Konfigurationsserver über das Weitverkehrsnetz übermittelt wird. Somit wird bei jedem Zurücksetzen des Heimautomatisierungsservers in dem Konfigurationsserver ein neues Tupel abgelegt, mit dessen Hilfe die Besitzbeziehung hergestellt werden kann. Das zuvor gespeicherte Tupel kann gelöscht oder inaktiv gesetzt werden. Der Registrierungscode kann auch bei der Speicherung einer Eigentumsbeziehung zwischen dem Benutzer und dem Heimautomatisierungsserver inaktiv oder ungültig gesetzt werden. So ist es beispielsweise möglich, wenn der Benutzer sich an dem Konfigurationsserver mit Hilfe des zweiten Tupels anmeldet und ein positives Vergleichsergebnis zwischen erstem Tupel und zweitem Tupel vorliegt, dass der Registrierungscode dann ungültig gestellt wird. So wird sichergestellt, dass jeweils nur eine einzige Anmeldung mit einem einmal erzeugten Registrierungscode möglich ist.

Gemäß einem vorteilhaften Ausführungsbeispiel wird vorgeschlagen, dass dem Registrierungscode eine Gültigkeitsdauer zugeordnet ist und dass nach Ablauf der Gültigkeitsdauer das Erzeugen einer Zugriffsberechtigung mit dem abgelaufenen Registrierungscode unmöglich ist. Zum einen ist es möglich, dass die Anzeige des neu erstellten Registrierungscodes nur eine gewisse Zeit an dem Display erfolgt. Somit kann der Eigentümer nur kurz nach dem Zurücksetzen des Heimautomatisierungsservers den Registrierungscode ablesen. Danach muss er sich diesen entweder gemerkt haben oder den Heimautomatisierungsserver erneut zurücksetzen. In dem zentralen Konfigurationsserver kann ein Mechanismus etabliert sein, der das gespeicherte Tupel nur eine gewisse Zeit gültig markiert. Nach Ablauf dieser Zeit wird das Tupel ungültig markiert und selbst bei Eingabe eines korrekten Tupels kann das Erstellen der Besitzbeziehung durch den Konfigurationsserver verweigert werden. Nach Herstellen der Besitzbeziehung kann der Registrierungscode ebenfalls ungültig gestellt werden, er ist dann also nur einmal verwendbar.

Die Besitzbeziehung ermöglicht das Erstellen von Benutzerkonten. Benutzerkonten ermöglichen es, unterschiedliche Zugriffsberechtigungen auf den Heimautomatisierungsserver zu definieren. Aus diesem Grunde wird vorgeschlagen, dass mit Hilfe einer Zugriffsberechtigung ein Benutzerkonto erstellt wird, wobei einem Benutzerkonto Zugriffsbeschränkungen auf den Heimautomatisierungsserver zugeordnet sein können. Somit können mittels der Benutzerkonten unterschiedliche Benutzerprofile und Zugriffsberechtigungsprofile abgebildet werden.

Gemäß einem vorteilhaften Ausführungsbeispiel wird vorgeschlagen, dass das Benutzerkonto auf dem Heimautomatisierungsserver und/oder dem zentralen Konfigurationsserver gespeichert wird. Somit können die verschiedenen Benutzerkonten in den verschiedenen Servern abgelegt sein.

Gemäß einem vorteilhaften Ausführungsbeispiel ist die Kennung eine Seriennummer des Heimautomatisierungsservers. Diese Kennung stellt somit Wissen dar, welches bei jedem Besitzer des Heimautomatisierungsservers verbleiben kann und gleichzeitig den Heimautomatisierungsserver eindeutig kennzeichnet.

Um zu verhindern, dass die Kennung zusammen mit dem Registrierungscode bei der Generierung des Registrierungscodes von dem Heimautomatisierungsserver zu dem zentralen Konfigurationsserver übertragen werden muss, was ein Angriffspunkt darstellt, wird auch vorgeschlagen, dass der Registrierungscode ein in dem Heimautomatisierungsserver erzeugte rollierender Code ist.

Auch ist es möglich, den Code als Hash-Code anstelle einer Übertragung als Klartext zu übertragen.

Auch ist es beispielsweise möglich, eine endliche Anzahl von Codes, mehrere Tausend, mehrere Zehntausend, mehrere eine Million, in einem Speicher sowohl in dem Heimautomatisierungsserver als auch dem zentralen Konfigurationsserver zu speichern. Sobald ein Registrierungscode in dem Heimautomatisierungsserver abgerufen wurde, springt ein Zähler automatisch um einen Wert weiter, was bedeutet, dass beim nächsten Abrufen der nächste gespeicherte Registrierungscode verwendet wird. Selbiges erfolgt im Kommunikationsserver, wenn ein Benutzer versucht, die Kennung zusammen mit dem Registrierungscode für das Erstellen einer Besitzbeziehung zu verwenden. Somit sind sowohl im Heimautomatisierungsserver als auch im zentralen Konfigurationsserver Listen hinterlegt, die die entsprechenden Registrierungscodes enthalten.

Ein Gerät kann ein Sensor und/oder ein Aktor sein.

Ein Sensor kann beispielsweise ein Schalter, ein Bewegungsmelder, ein Taster, ein Türkontakt, ein Thermostat, ein Fensterkontakt, ein Bildsensor, ein Helligkeitssensor, ein Temperatursensor, ein Binärsensor, ein Mikrofon, oder eine andere Einrichtung zum Erfassen von Umweltveränderungen sein.

Ein Aktor kann insbesondere ein Relais, ein Ventil, ein Motor, ein Stellmotor, ein Dimmer, eine Rolladensteuerung, ein Schalter, ein Signalgeber, ein Infrarotsignalgeber, ein akustischer Signalgeber, ein Bedienteil, ein Informationsterminal oder ein sonstiges Gerät zum Durchführen von Schaltvorgängen, Steuervorgängen, Regelvorgängen oder sonstigen Aktionen und/oder zum Ausgeben von Informationen und Zuständen sein.

Ein Heimautomatisierungsserver (zentrales Steuergerät, Smart Home Controller SHC) kann ein zentral angeordneter Rechner sein, der Steuerfunktionen übernimmt. Dieser kann Parameter für die Konfiguration von Sensoren und Aktoren überarbeiten und aussenden. Auch kann der Server für eine zentrale Kommunikationsschlüssel-Verwaltung zuständig sein. Insbesondere kann der Server für eine zentrale Bekanntmachung eines Netzwerkschlüssels verantwortlich sein. Der Server kann beispielsweise mit einem Weitverkehrsnetz verbunden sein. Hierbei ist es beispielsweise möglich, dass der Server über einen entsprechenden Router mit einem Weitverkehrsnetz, beispielsweise einem TCP/IP basiertes Weitverkehrsnetz verbunden ist. Insbesondere kann es möglich sein, auf den Heimautomatisierungsserver mittels eines Konfigurationsservers über das Weitverkehrsnetz zuzugreifen und aus der Ferne Konfigurationen vorzunehmen. Der Server kann dergestalt sein, dass er lediglich zu Konfigurationszwecken mit Sensoren und Aktoren kommuniziert. Das Heimautomatisierungssystem kann darüber hinaus so ausgelegt sein, dass eine Kommunikation zwischen Sensoren und Aktoren zur Steuerung in Reaktion auf Ereignisse erfolgt, ohne dass der Server zwischengeschaltet ist. Hierdurch lässt sich eine autarke Heimautomatisierung realisieren, die auch ohne einen Server funktioniert. Dies ist jedoch nur dann sicher möglich, wenn ein Netzwerkschlüssel für die Verschlüsselung von Kommunikation bei den Geräten bekannt ist.

Der Prozessor kann beispielsweise ein digitaler Signalprozessor (DSP) sein. Auch kann der Prozessor ein Mikrocontroller sein. Der Prozessor kann ein beliebiger Mikroprozessor sein, der zum Einen zum Auswerten von Eingangssignalen und zum Anderen zum Ausgeben von Steuerungssignalen eingerichtet ist.

Die Kommunikationsschnittstellen können beispielsweise Einrichtungen zur Kommunikation über ein Drahtlosnetzwerk sein. Auch kann eine Kommunikationsschnittstelle über ein drahtgebundenen Netzes kommunizieren. Beispielsweise kann eine Kommunikation über LAN, WLAN, Bluetooth oder dergleichen erfolgen. Insbesondere kann die Kommunikationsschnittstelle beispielsweise bei einer Frequenz von 868Mz mit einem Frequenz Shift Key Nachrichten aussenden. Insbesondere sind Datenraten von 10KB/s möglich. Ein Zugriffsprotokoll kann beispielsweise ein CSMA/CA Zugriffsprotokoll sein.

Die Kommunikation mittels der zweiten Kommunikationsschnittstelle kann eine bidirektionale Kommunikation auf einem Bus, insbesondere einem Funkbus sein. Die Kommunikationsschnittstelle kann zur Verschlüsselung der übertragenen Daten eingerichtet sein. Insbesondere kann eine symmetrische Verschlüsselung durch die Kommunikationsschnittstelle unterstützt sein. Insbesondere kann eine CCM-Verschlüsselung oder CCM*-Verschlüsserlung unterstützt sein. Insbesondere kann ein authentifiziertes Verschlüsselungsverfahren nach dem IEEE 802.11 Standard verwendet werden. Auch ist ein erweitetes Verschlüsselungsverfahren nach dem Advanced Encryption Standard Counter Mode (AES/CCM) möglich, bei dem ein 16Byte Block Chiffre verwendet wird. Für die symmetrische Verschlüsselung kann es möglich sein, dass jeder Sensor, jeder Aktor und jeder zentrale Steuerrechner (Server) eine Seriennummer aufweist. Auch kann es möglich sein, dass die Seriennummer eines jeden Gerätes in einer Zentrale bekannt ist. Die Kommunikation über die Kommunikationsschnittstelle kann im Multicast als auch im Unicast Modus erfolgen.

Ein weiterer Aspekt ist ein Heimautomatisierungsserver mit einem Prozessor, einer ersten Kommunikationsschnittstelle zur Kommunikation über ein Weitverkehrsnetz mit einem zentralen Konfigurationsserver, einer zweiten Kommunikationsschnittstelle zur Kommunikation mit lokalen Geräten und einer Anzeigeeinrichtung, welcher dadurch gekennzeichnet ist, dass der Prozessor die Anzeigeeinrichtung zur Anzeige eines Registrierungscodes ansteuert und dass der Prozessor zur Einrichtung einer Zugriffsberechtigung über das Weitverkehrsnetz auf den Heimautomatisierungsserver die erste Kommunikationsschnittstelle zum Aussenden des Registrierungscodes zusammen mit einer den Heimautomatisierungsserver eindeutig kennzeichnenden Kennung an den zentralen Konfigurationsserver ansteuert.

Der Registrierungscode kann auch in dem zentralen Konfigurationsserver erzeugt werden und von dem Heimautomatisierungsserver empfangen und dem Benutzer angezeigt werden. Die dem Heimautomatisierungsserver eindeutig kennzeichnende Kennung kann in dem zentralen Konfigurationsserver zusammen dem dort erzeugten Registrierungscode gespeichert werden. Ein Benutzer kann eine Beziehung dadurch herstellen, dass er im zentralen Konfigurationsserver den Registrierungscode zusammen mit der den Heimautomatisierungsserver eindeutig kennzeichnenden Kennung eingibt und somit den Besitz des Heimautomatisierungsservers nachweist. Eine Übertragung des Registrierungscodes zusammen mit der den Heimautomatisierungsserver eindeutig kennzeichnenden Kennung von dem Heimautomatisierungsserver an den zentralen Konfigurationsserver kann dann entfallen, da in dem zentralen Konfigurationsserver bereits der Registrierungscode bekannt ist und dieser eindeutig dem Heimautomatisierungsserver kennzeichnenden Kennung zugeordnet ist.

Auch ist es möglich, dass der Registrierungscode aus Zufallscodes zusammengesetzt ist, die zum Einen in dem Heimautomatisierungsserver und zum Anderen in dem zentralen Konfigurationsserver erzeugt wurden. Die Zufallscodes können in dem Heimautomatisierungsserver zusammengesetzt werden und der Registrierungscode kann dort erzeugt werden. Auch ist es möglich, dass die Zufallscodes in dem zentralen Konfigurationsserver zusammengesetzt werden.

Auch kann ein Speicher zum Speichern einer Besitzbeziehung zwischen dem Benutzer und dem Heimautomatisierungsserver in dem zentralen Konfigurationsserver bei einem positiven Vergleichsergebnis in dem Heimautomatisierungsserver vorgesehen sein.

Ein weiterer Aspekt ist ein zentraler Konfigurationsserver mit einem Speicher eingerichtet zum Speichern zumindest eines ersten Tupels aus einer den Heimautomatisierungsserver eindeutig kennzeichnenden Kennung und einem Registrierungscode in dem zentralen Konfigurationsserver, eine Kommunikationsschnittstelle eingerichtet zum Empfangen eines zweiten Tupels aus zumindest einer Kennung und einem Registrierungscode am zentralen Konfigurationsserver von einem Benutzer, einem Prozessor eingerichtet zum Vergleichen des ersten Tupels mit dem zweiten Tupel wobei die Kommunikationsschnittstelle mit Hilfe der Besitzbeziehung einen Zugriff auf den Heimautomatisierungsserver über der Weitverkehrsnetz ermöglicht.

Der Speicher kann zum Speichern einer Besitzbeziehung zwischen dem Benutzer und dem Heimautomatisierungsserver in dem zentralen Konfigurationsserver bei einem positiven Vergleichsergebnis eingerichtet sein.

Ein weiterer Aspekt ist ein System mit einem solchen zentralen Konfigurationsserver und einem genannten Heimautomatisierungsserver.

Die zuvor genannten Verfahren können auch als Computerprogramm oder als auf einem Speichermedium gespeichertes Computerprogramm realisiert werden. Hierbei kann sensorseitig, aktorseitig und/oder serverseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale der abhängigen Ansprüche unter Umgehung der Merkmale der unabhängigen Ansprüche in Alleinstellung oder frei miteinander kombiniert eigenständig erfinderisch sein.

Nachfolgend wird der Gegenstand anhand einer Ausführungsbeispiele zeigenden Zeichnung näher erläutert.

In der Zeichnung zeigen:
- Fig. 1: ein Ausführungsbeispiel eines Systems zur Heimautomatisierung;
- Fig. 2: eine schematische Ansicht eines Heimautomatisierungsservers;
- Fig. 3: eine schematische Ansicht eines zentralen Kommunikationsservers;
- Fig. 4: ein beispielhaftes Ablaufdiagramm gemäß eines ersten Ausführungsbeispiels;
- Fig. 5: ein beispielhaftes Ablaufdiagramm gemäß eines zweiten Ausführungsbeispiels;
- Fig. 6: ein beispielhaftes Ablaufdiagramm gemäß eines dritten Ausführungsbeispiels.

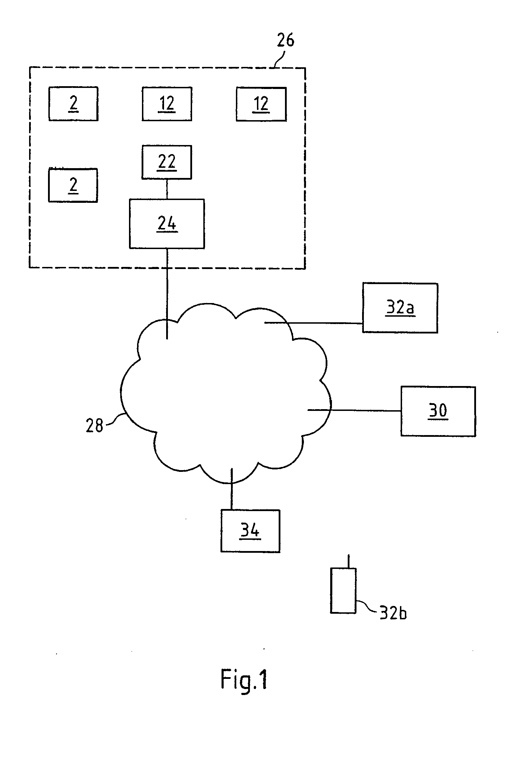

Fig. 1 zeigt beispielsweise die Umgebung 26 eines Hauses oder einer Wohnung. In dieser Umgebung 26 ist ein Router 24 vorgesehen, der eine Kommunikationsverbindung mit dem Internet 28 zur Verfügung stellt und Datenpakete in das Internet 28 aussendet und aus dem Internet 28 empfangen kann. An den Router 24 ist ein Heimautomatisierungsserver 22 (Smart Home Controller SHC) angeschlossen. Über den Router 24 kann der SHC 22 Datenpakete mit dem Internet 28 austauschen. Der SHC 22 kann über eine Funkverbindung eine Kommunikation mit Sensoren 2 als auch Aktoren 12 aufbauen. Die Kommunikation kann bidirektional sein und auf Anforderungen erfolgen.

An das Internet 28 ist eine zentrale Verwaltungseinheit (zentraler Konfigurationsserver) 30 angeschlossen. Die zentrale Verwaltungseinheit 30 kann über das Internet 28 und den Router 24 eine Kommunikation mit dem SHC 22 aufnehmen, um beispielsweise eine Konfiguration der Sensoren 2, der Aktoren 12 oder des SHCs 22 vorzunehmen.

Die Konfiguration des SHCs 22 als auch der Sensoren 2 und der Aktoren 12 über das Internet 28 kann beispielweise von einem privaten Personalcomputer 32a erfolgen. Hierzu kann der Personalcomputer 32a beispielsweise eine Verbindung über das Internet 28 mit der zentralen Verwaltungseinheit 30 aufbauen und mittels der zentralen Verwaltungseinheit 30 eine Konfiguration des SHCs 22, des Sensors 2 oder des Aktors 12 vornehmen. Diese Konfigurationsänderung kann dann über das Internet 28 von der zentralen Verwaltungseinheit 30 über den Router 24 zu dem SHC 22 übermittelt werden. Auch kann eine Konfiguration beispielsweise über ein Mobiltelefon 32b erfolgen, wobei das Mobiltelefon 32b über ein Gateway 34 mit dem Internet 28 verbunden ist und über das Gateway 34 eine Verbindung mit der zentralen Verwaltungseinheit 30 aufnehmen kann.

Eine sichere Kommunikation zwischen dem SHC 22 und der zentralen Verwaltungseinheit 30 kann beispielsweise dadurch gewährleistet sein, dass der SHC 22 mittels des Routers 24 einen Kommunikationstunnel durch das Internet 28 mit der zentralen Verwaltungseinheit 30 aufbaut, sobald der SHC 22 mit dem Router 24 verbunden wird. Hierzu muss der SHC 22 lediglich die feste IP-Adresse oder den DNS Namen der zentralen Verwaltungseinheit 30 kennen und mittels eines Kennworts und eines Schlüssels die Kommunikation mit der zentralen Verwaltungseinheit 30 verschlüsseln. Die Authentifizierung des SHC 22 an der zentralen Verwaltungseinheit 30 kann über Shared Secret erfolgen oder über Zertifikate. Für die Erstkommunikation kann ein Default-Zertifikat verwendet werden. Danach kann jeder SHC ein personalisiertes, "lebenslanges" Zertifikat erhalten, über das eine sichere verschlüsselte Kommunikation möglich ist.

Über diese verschlüsselte Verbindung kann nun von der zentralen Verwaltungseinheit 30 eine Konfiguration des SHCs 22, des Sensors 2 als auch des Aktors 12 erfolgen. Die Konfiguration kann von dem Personalcomputer 32a oder dem Mobiltelefon 32b gesteuert werden. Auch ist es möglich, mittels des Personalcomputers 32a als auch des Mobiltelefons 32b Ereignisse am Sensor 2 zu generieren, um somit bestimmte Aktionen der Aktoren 12 auszulösen. Auch können Status von den Sensoren 2 und den Aktoren 12 so abgefragt werden.

Die Kommunikation zwischen SHC 22, Aktoren 12 und Sensoren 2 ermöglicht zum Einen die Konfiguration der Sensoren 2 und der Aktoren 12 als auch die Steuerung von an den Aktor 12 angeschlossenen elektrischen Verbrauchern mittels der Sensoren 2. Die Aktor-Steuerung wird durch Verknüpfungen zwischen einem Sensor 2 und Aktoren 12 als auch durch Sensor-Parameter und/oder Aktor-Parameter reguliert.

An die verschiedenen Aktoren 12 können verschiedenste elektrische Verbraucher angeschlossen werden. Bei der Konfiguration des Sensors 2 als auch der Aktoren 12 über den SHC 22 kann gegenständlich das Kommunikationsaufkommen mit einem Sensor 2 reduziert werden, so dass der energetisch eigengespeiste Sensor 2 möglichst wenig Energie verbraucht. Die Aktoren 12 können beispielsweise dauerhaft mit Energie versorgt werden, beispielsweise an eine Stromversorgung angeschlossen sein und somit dauerhaft Nachrichten empfangen und aussenden. Auch können die Aktoren 12 derart eingerichtet sein, dass sie dauerhaft Nachrichten empfangen und in Abständen Nachrichten aussenden. Auch können die Aktoren 12 so eingerichtet sein, dass sie dauerhaft Nachrichten empfangen können und nur bei Bedarf Nachrichten aussenden. Die Energieeinsparung muss hauptsächlich an den Sensoren 2 erfolgen, welche energetisch eigengespeist sind.

Neben der Energieeinsparung ist jedoch auch die Sicherung der Kommunikation und des Zugriffs auf den SHC 22 mittels des zentralen Konfigurationsservers 30 wichtig.

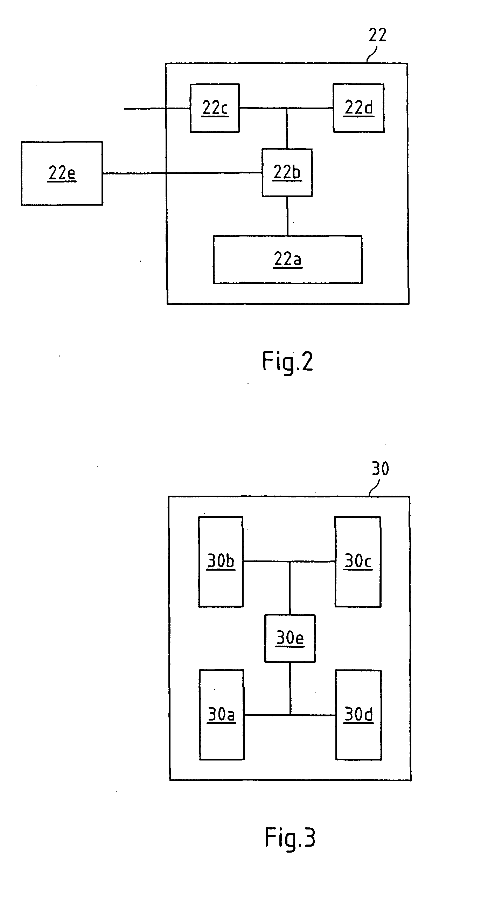

Um den Zugriff auf den SHC 22 zu sichern, ist ein in Fig. 2 vorgesehener SHC notwendig. Fig. 2 zeigt den SHC 22 mit einer Kommunikationsschnittstelle 22a. Die Kommunikationsschnittstelle 22a dient zur Kommunikation über den Router 24 mit dem Internet 28 und somit zwischen dem SHC 22 und dem zentralen Konfigurationsserver 30.

Ferner ist ein zentraler Prozessor 22b vorgesehen, der die einzelnen Komponenten des SHC 22 ansteuert. Darüber hinaus weist der SHC 22 einen Speicher 22c auf, in dem Benutzerkonten gespeichert werden können. Ferner können Sensor- und Aktorparameter und Regeln gespeichert sein, um das Heimautomatisierungssystem zu steuern. Der SHC 22 weist darüber hinaus eine zweite Kommunikationsschnittstelle 22d auf, mit welcher eine Kommunikation mit den Aktoren 12 und den Sensoren 2, bevorzugt drahtlos, möglich ist.

Schließlich weist der SHC 22 eine Anzeige 22e auf, über die ein Registrierungscode einem Benutzer angezeigt werden kann. Bei jedem Neustart des SHC 22 oder bei jedem Zurücksetzen des SHC 22 in einen Auslieferungszustand oder bei einem anderen vorher definierten Ereignis, wird in dem Prozessor 22b ein neuer Registrierungscode erzeugt.

Auch ist es möglich, dass ein Registrierungscode in dem SHC 22 von dem zentralen Konfigurationsserver 30 empfangen wird. Der zentrale Konfigurationsserver 30 kann einen Registrierungscode beispielsweise immer dann erzeugen, wenn der SHC 22 zurückgesetzt wurde. Auch ist es möglich, dass der zentrale Konfigurationsserver 30 den Registrierungscode dann erzeugen kann, wenn eine Besitzbeziehung hergestellt wurde. In diesem Fall kann ein vorheriger Registrierungscode ungültig gestellt werden und ein neuer Registrierungscode erzeugt werden. Auch ist es möglich, dass ein Registrierungscode in dem zentralen Konfigurationsserver 30 immer dann erstellt wird, wenn ein Benutzer sich mit der den SHC 22 eindeutig kennzeichnenden Kennung an dem zentralen Konfigurationsserver 30 anmeldet, um die Besitzbeziehung herzustellen. In diesem Moment kann der Registrierungscode in dem Konfigurationsserver 30 erzeugt werden und über eine sichere Verbindung über das Internet 28 und den Router 24 an den SHC 22 zur Anzeige beim Benutzer übertragen werden. Der Benutzer kann in diesem Moment den Registrierungscode ablesen und ebenfalls über das Internet in den zentralen Konfigurationsserver 30 eingeben und somit den Besitz des SHC 22 gegenüber dem zentralen Konfigurationsserver 30 nachzuweisen.

Der Registrierungscode kann auch aus in dem SHC 22 und dem zentralen Konfigurationsserver 30 erzeugten Zufallscodes zusammengesetzt sein. Der Registrierungscode kann entweder ein Zufallscode, ein rollierender Code oder ein Code der aus einer Liste entnommen wird, die ebenfalls in dem zentralen Konfigurationsserver 30 bekannt ist, sein. Der mittels des Prozessors 22b ermittelte Registrierungscode wird auf der Anzeige 22e dem Benutzer angezeigt. Dieser Registrierungscode stellt somit einen Besitzfaktor dar, welcher für die Autorisierung des Benutzers zur Konfiguration des SHC 22 verwendet wird. Neben diesem Besitzfaktor ist auf dem SHC 22 bevorzugt eine Seriennummer abgedruckt, die der Benutzer ebenfalls ablesen kann, die sich jedoch nicht mehr verändert.

Fig. 3 zeigt einen zentralen Konfigurationsserver 30. Der Konfigurationsserver 30 weist eine Kommunikationsschnittstelle 30a und eine zweite Kommunikationsschnittstelle 30b auf. Die erste Kommunikationsschnittstelle 30a ermöglicht die Kommunikation des Konfigurationsservers 30 über das Internet 28 mit einem SHC 22. Die zweite Kommunikationsschnittstelle 30b ermöglicht eine Kommunikation des Konfigurationsservers 30 mit einem Benutzer beispielsweise über einen Personalcomputer 32a oder ein Gateway 34 und ein Mobiltelefon 32b.

Die Kommunikationsschnittstellen 30a, 30b werden durch einen in dem Konfigurationsserver 30 vorgesehenen Prozessor 30e gesteuert. Der Prozessor 30e steuert darüber hinaus eine Vergleichseinrichtung 30c und einen Speicher 30d. In dem Speicher 30d sind Tupel von Kennung und Registrierungscode abgespeichert. Mittels dieser Tupel ist es möglich, dass ein Benutzer sich sicher für den Zugriff auf den SHC 22 autorisieren kann. Die entsprechenden Tupel werden über die Kommunikationsschnittstelle 30a von dem SHC 22 empfangen, sobald der SHC 22 zurückgesetzt wird bzw. sobald in dem SHC 22 ein neuer Registrierungscode erzeugt wurde. Neben dem Tupel ist auch eine Kommunikationsadresse dem SHC 22 zugeordnet, über die eine Verbindung zwischen dem SHC 22 und dem Konfigurationsserver 30 hergestellt werden kann.

Wird über die Kommunikationsschnittstelle 30b ein Zugriff auf einen SHC 22 gewünscht, so wird zunächst eine Autorisierung bzw. das Vorhandensein einer Besitzbeziehung geprüft. Dies wird mittels des Prozessors 30e und in dem Speicher 30d abgespeicherten Besitzbeziehungen durchgeführt. Liegt keine Besitzbeziehung vor, d.h. ist zu einem Benutzernamen und einem Passwort kein zugeordneter SHC 22 gespeichert, so muss eine erneute Autorisierung erfolgen. Diese erfolgt durch Eingabe eines Registrierungscodes und einer Kennung. Der Prozessor bzw. die Vergleichseinrichtung 30 führt ein Vergleich von in dem Speicher 30d gespeicherten Tupeln mit den eingegebenen Tupeln durch, und bei einem positiven Vergleichsergebnis erfolgt eine Autorisierung.

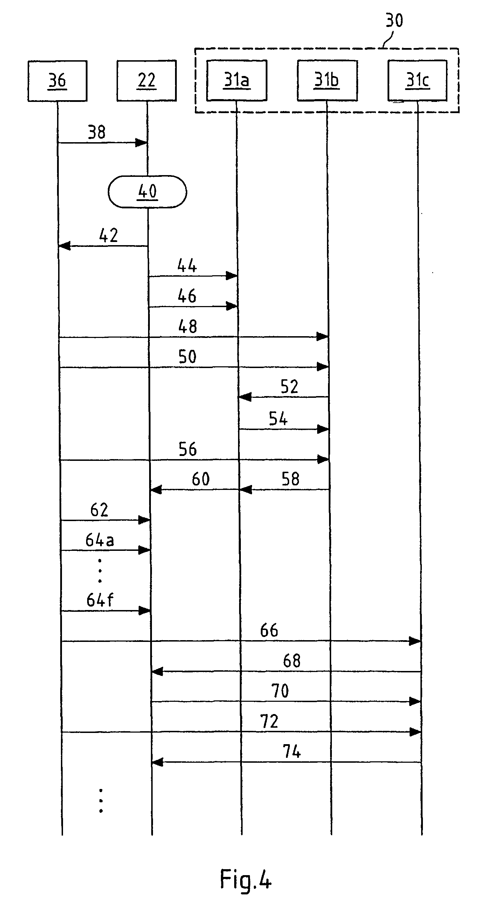

Der Ablauf der Autorisierung ist nachfolgend in Fig. 4 bis 6 dargestellt.

Fig. 4 zeigt ein Nachrichtendiagramm zwischen einem Benutzer 36, einem SHC 22 und einem Konfigurationsserver 30.

Der Konfigurationsserver 30 kann logisch und/oder physikalisch in drei Dienste unterteilt sein. Die Dienste sind beispielhaft ein Registrierungsdienst 31a, ein Personalisierungsdienst 31b und ein Weiterleitungsdienst 31c. Jedoch ist es auch möglich, dass die Dienste 31 in einer logischen und/oder physikalischen Einheit zusammengefasst sind.

Für die Autorisierung eines Benutzers sind folgende Schritte notwendig.

Zunächst führt der Benutzer 36 ein Reset 38 an dem SHC 22 durch. Alternativ zum Durchführen eines Resets 38 kann auch ein anderes Ereignis, beispielsweise ein Zeitablauf, ein Neustart, oder ein sonstiges Ereignis eintreten. Sobald an dem SHC 22 der Reset 38 oder ein gleichwertiges Ereignis registriert wurde, löst der Prozessor 22b ein Programm zum Generieren 40 eines zufälligen Registrierungscodes auf dem Prozessor 22b auf. Der generierte 40 Registrierungscode wird mit Hilfe des Prozessors 22b auf der Anzeige 22e angezeigt 42.

Darüber hinaus meldet sich der SHC 22 mit Hilfe der Kommunikationsschnittstelle 22a über die Kommunikationsschnittstelle 30a an dem zentralen Konfigurationsserver 30 insbesondere an dem Registrierungsdienst 31a an 44. Bei der Anmeldung 44 übermittelt der SHC 22 an den Konfigurationsserver 30 zumindest seine Seriennummer. Anschließend oder gleichzeitig übermittelt 46 der SHC 22 an den Registrierungsdienst 31a des Konfigurationsservers 30 den soeben generierten 40 Registrierungscode oder den verschlüsselten Registrierungscode oder einen Hash-Code des Registeriungscodes. In dem Konfigurationsserver 30 sind somit die Kennung (Seriennummer) und der Registrierungscode bekannt. In dem Registrierungsdienst 31a bzw. dem Speicher 30d wird mittels des Prozessors 30e das Tupel aus Seriennummer und Registrierungscode abgespeichert.

Möchte ein Benutzer 36 sich nun einen Zugriff auf den SHC 22 über den Konfigurationsserver 30 ermöglichen, greift er zunächst auf eine Internetseite des Registrierungsdienstes 31b zu 48. Über die Internetseite im Personalisierungsdienst 31b gibt der Benutzer die Seriennummer und den an der Anzeige 22e angezeigten Registrierungscode ein 50. Mit der Eingabe 50 der Seriennummer stellt der Benutzer 36 sicher, dass er im Besitz des Wissensfaktors für die Autorisierung ist. Mit der Eingabe 50 des Registrierungscodes stellt der Benutzer 36 sicher, dass er im Besitz des Besitzfaktors ist. Beide Faktoren ermöglichen eine sichere Autorisierung des Benutzers 36, da der Registrierungscode nur dem Besitzer bekannt ist und sich von Besitzer zu Besitzer verändert.

Der Personalisierungsdienst 31b überprüft 52 am Registrierungsdienst 31a mittels der Vergleichseinrichtung 30c das vom Benutzer 36 eingegebene Tupel mit dem vom SHC 22 erhaltenen und in dem Speicher 30d gespeicherten Tupel. Bei einem positiven Vergleichsergebnis meldet 54 der Registrierungsdienst 31a den Personalisierungsdienst 31b die erfolgreiche Autorisierung. Im Anschluss daran teilt der Personalisierungsdienst 31b dem Benutzer 36 die erfolgreiche Autorisierung mit und es wird eine Besitzbeziehung zwischen dem Benutzer 36 und dem SHC 22 hergestellt.

Die Besitzbeziehung kann sich durch einen Benutzernamen und ein Passwort ausdrücken. Mit Hilfe des Benutzernamens und des Passwortes sowie einer ebenfalls gespeicherten Kommunikationsadresse des SHCs 22 ist es dem Benutzer 36 somit möglich, über den Konfigurationsserver 30 auf den SHC 22 zu Konfigurations- und Bedienzwecken zuzugreifen.

Das Benutzerkonto bzw. die Besitzbeziehung kann in dem SHC 22 gespeichert werden. Eine solche Speicherung 22 ist in Fig. 4 dargestellt. Nachdem der Benutzer die Besitzbeziehung durch Eingabe eines Benutzerkontos eines Benutzerpasswortes hergestellt hat, übermittelt 58 der Personalisierungsdienst 31b die entsprechende Information an den Registrierungsdienst 31a. Der Registrierungsdienst 31a übermittelt 60 die Information zu der Besitzbeziehung samt Benutzerkonto an den SHC 22. In dem SHC 22 wird in dem Speicher 22c die Besitzbeziehung abgespeichert.

Möchte der Benutzer nun auf den SHC 22 zugreifen, authentisiert er sich gegenüber dem SHC 22 unmittelbar durch Eingabe 62 des Benutzernamens und des Passwortes. Daraufhin kann der Benutzer Interaktionen 64a bis 64f am SHC 22 durchführen.

Möchte der Benutzer nun eine Konfiguration des SHC 22 vornehmen, welche Konfiguration es notwendig macht, dass der Benutzer 36 den Konfigurationsserver 30 benutzt, so authentifiziert 66 sich der Benutzer 36 gegenüber dem Weiterleitungsdienst 31c des Konfigurationsservers 30 mit Hilfe des Benutzernamens und des Passwortes. Da bei dem in Fig. 4 dargestellten Fall das Benutzerkonto am SHC 22 gespeichert ist, überprüft 68 der Weiterleitungsdienst 31c an dem SHC 22 den eingegebenen Benutzernamen samt Passwort. Liegt eine korrekte Authentifizierung vor, so autorisiert 70 der SHC 22 den Benutzer am Weiterleitungsdienst 31c. Nach einer erfolgreichen Autorisierung kann der Benutzer 36 Nutzerinteraktionen 72 am Weiterleitungsdienst 31c des Konfigurationsservers 30 durchführen, insbesondere Konfigurationsänderungen am SHC 22 vornehmen. Die Konfigurationsänderungen werden im SHC 22 mitgeteilt 74.

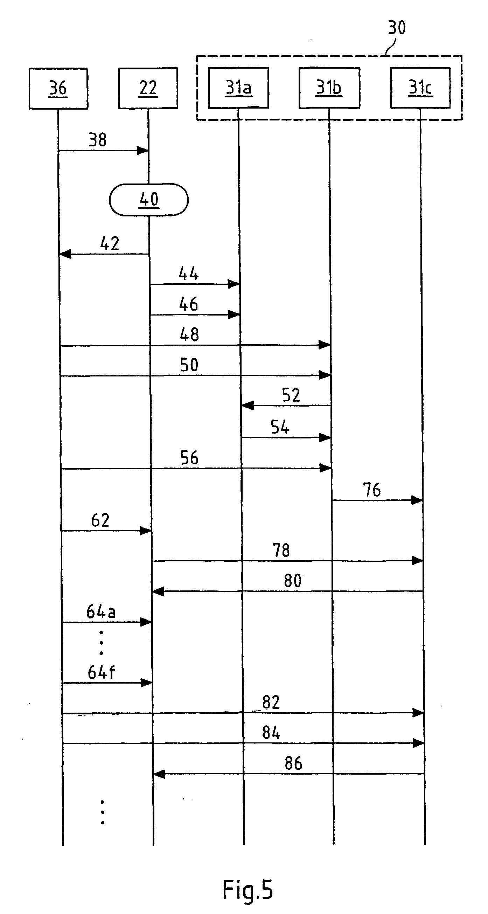

Fig. 5 zeigt einen ähnlichen Ablauf eines Verfahrens, wobei hier jedoch die Besitzbeziehung als auch das Benutzerkonto im zentralen Konfigurationsserver 30 gespeichert sind. Bis zum Schritt 56 entspricht das Verfahren gemäß Fig. 5 dem Verfahren gemäß Fig. 4.

Nachdem der Benutzer das Benutzerkonto angelegt hat, wird der Benutzername samt Passwort vom Personalisierungsdienst 31 an den Weiterleitungsdienst 31c weitergeleitet 76. In diesem Fall wird in dem Konfigurationsserver 30 bzw. in dem Speicher 30d das Benutzerkonto abgespeichert.

Möchte ein Benutzer nun direkt auf den SHC 22 zugreifen, so gibt er zunächst Benutzername und Passwort am SHC 22 ein 62. Der SHC 22 überprüft die Eingabe, in dem die eingegebenen Nutzerkontodaten an den Weiterleitungsdienst 31c übermittelt 78 werden. Stimmen die eingegebenen Daten mit in dem Speicher 30d gespeicherten Daten überein, so autorisiert der Weiterleitungsdienst 31c den Benutzer und signalisiert 80 dies dem SHC 22. Daraufhin kann der Benutzer 36 an dem SHC 22 unmittelbar Benutzeraktionen 64a-f durchführen.

Ist eine Konfiguration über den Konfigurationsserver 30 notwendig, so meldet sich der Benutzer unmittelbar am Weiterleitungsdienst 31c an 82. Da das Benutzerkonto im Weiterleitungsdienst 31c gespeichert ist, kann unmittelbar im Anschluss eine Nutzerinteraktion 84 erfolgen, welche bei einer erfolgreichen Authentifizierung zu einer Weiterleitung 86 der Konfigurationsänderungen an den SHC führt.

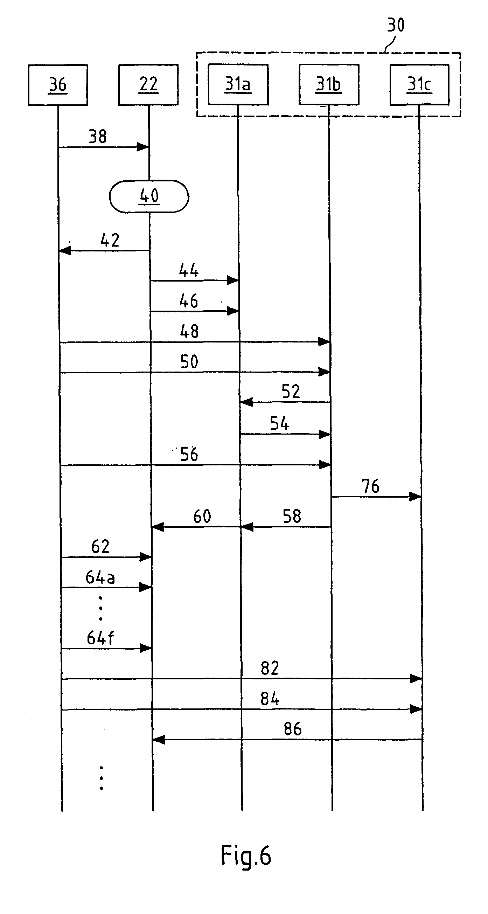

Fig. 6 zeigt den Ablauf eines in den Fig. 4 und 5 gezeigten Verfahrens. Die Schritte 38 bis 56 entsprechen denen in den Fig. 4 und 5.

In dem in Fig. 6 gezeigten Verfahren wird die Besitzbeziehung zum einen in dem Konfigurationsserver 30 und parallel dazu auch in dem SHC 22 gespeichert. Das bedeutet, dass die Schritte 76 gemäß Fig. 5 und 58 und 60 gemäß Fig. 4 ausgeführt werden, so dass durch Schritt 76 in dem Weiterleitungsdienst 31c bzw. dem Speicher 30d des Konfigurationsservers 30 das Benutzerkonto gespeichert wird und parallel durch die Schritte 58 bis 60 in dem SHC 22 das Benutzerkonto gespeichert wird. Somit ist bei einer Nutzerinteraktion an dem SHC direkt eine Authentifizierung 62 unmittelbar am SHC 22 möglich. Ist eine Konfiguration über den Server 30 notwendig, können die Schritte 82 bis 86 gemäß Fig. 5 durchgeführt werden.

## Patentansprüche

1. Verfahren zur Erzeugung einer Zugriffsberechtigung auf einen Heimautomatisierungsserver (22) mittels eines zentralen Konfigurationsservers (30) über ein Weitverkehrsnetz (28), umfassend:
- Speichern zumindest eines ersten Tupels aus einer den Heimautomatisierungsserver (22) eindeutig kennzeichnenden Kennung und einem Registrierungscode in dem zentralen Konfigurationsserver (30),
- Empfangen eines zweiten Tupels aus zumindest einer Kennung und einem Registrierungscode am zentralen Konfigurationsserver (30) von einem Benutzer,
- Vergleichen des ersten Tupels mit dem zweiten Tupel durch den zentralen Konfigurationsserver,
- Speichern einer Besitzbeziehung zwischen dem Benutzer und dem Heimautomatisierungsserver (22) bei einem positiven Vergleichsergebnis, derart, dass mittels der Besitzbeziehung eine Zugriffsberechtigung auf den Heimautomatisierungsserver (22) über das Weiterverkehrsnetz (28) erzeugt wird.

2. Verfahren nach Anspruch 1, **dadurch gekennzeichnet, dass** der Registrierungscode ein in dem Heimautomatisierungsserver (22) erzeugter Zufallscode ist und dass das erste Tupel von dem Heimautomatisierungsserver (22) an den zentralen Konfigurationsserver (30) über das Weitverkehrsnetz (28) übermittelt wird, oder dass der Registrierungscode ein in dem zentralen Konfigurationsserver (30) erzeugter Zufallscode ist und von dem zentralen Konfigurationsserver (30) an den Heimautomatisierungsserver (22) über das Weitverkehrsnetz (28) übermittelt wird.

3. Verfahren nach Anspruch 1 oder 2, **dadurch gekennzeichnet, dass** der Registrierungscode an einer Anzeige (22e) an dem Heimautomatisierungsserver (22) angezeigt wird.

4. Verfahren nach einem der Ansprüche 1 bis 3, **dadurch gekennzeichnet, dass** jeweils ein neuer Registrierungscode bei jedem Zurücksetzen des Heimautomatisierungsservers (22) erzeugt wird.

5. Verfahren nach einem der Ansprüche 1 bis 4, **dadurch gekennzeichnet, dass** dem Registrierungscode eine Gültigkeitsdauer zugeordnet ist und dass nach Ablauf der Gültigkeitsdauer das Erzeugen einer Zugriffsberechtigung mit dem abgelaufenen Registrierungscode unmöglich ist oder dass der Registrierungscode nach einer einmaligen Verwendung ungültig markiert wird.

6. Verfahren nach einem der Ansprüche 1 bis 5, **dadurch gekennzeichnet, dass** mit Hilfe einer Zugriffsberechtigung ein Benutzerkonto erstellt wird, wobei einem Benutzerkonto Zugriffsbeschränkungen auf den Heimautomatisierungsserver (22) zugeordnet sind.

7. Verfahren nach Anspruch 6, **dadurch gekennzeichnet, dass** das Benutzerkonto auf dem Heimautomatisierungsserver (22) und/oder dem zentralen Konfigurationsserver (30) gespeichert wird.

8. Verfahren nach einem der Ansprüche 1 bis 4, **dadurch gekennzeichnet, dass** die Kennung eine Seriennummer des Heimautomatisierungsservers (22) ist.

9. Verfahren nach Anspruch 1, **dadurch gekennzeichnet, dass** der Registrierungscode ein in dem Heimautomatisierungsserver (22) erzeugter rollierender Code ist.

10. Heimautomatisierungsserver mit
- einem Prozessor (22b),
- einer ersten Kommunikationsschnittstelle (22a) zur Kommunikation über ein Weitverkehrsnetz mit (28) einem zentralen Konfigurationsserver (30),
- einer zweiten Kommunikationsschnittstelle (22a) zur Kommunikation mit lokalen Geräten (2, 12), und
- einer Anzeigeeinrichtung (22e),
**dadurch gekennzeichnet,**
- **dass** der Prozessor (22b) die Anzeigeeinrichtung (22e) zur Anzeige eines Registrierungscodes ansteuert, und
- **dass** der Prozessor (22b) zur Einrichtung einer Zugriffberechtigung über das Weitverkehrsnetz (28) auf den Heimautomatisierungsserver (22) die erste Kommunikationsschnittstelle (22a) zum Aussenden des Registrierungscode zusammen mit einer den Heimautomatisierungsserver (22) eindeutig kennzeichnenden Kennung an den zentralen Konfigurationsserver (30) oder zum Empfangen des Registrierungscodes von dem zentralen Konfigurationsserver (30) ansteuert

11. Heimautomatisierungsserver nach Anspruch 10, **dadurch gekennzeichnet, dass** jeweils ein neuer Registrierungscode bei jedem Zurücksetzen des Heimautomatisierungsservers (22) angezeigt wird.

12. Zentraler Konfigurationsserver mit:
- einem Speicher (30d) eingerichtet zum Speichern zumindest eines ersten Tupels aus einer den Heimautomatisierungsserver (22) eindeutig kennzeichnenden Kennung und einem Registrierungscode in dem zentralen Konfigurationsserver (30),
- einer Kommunikationsschnittstelle (30b) eingerichtet zum Empfangen eines zweiten Tupels aus zumindest einer Kennung und einem Registrierungscode am zentralen Konfigurationsserver von einem Benutzer,
- einem Prozessor (30e) eingerichtet zum Vergleichen des ersten Tupels mit dem zweiten Tupel, und
- wobei die Kommunikationsschnittstelle (30b) mit Hilfe einer Besitzbeziehung zwischen dem Benutzer und dem Heimautomatisierungsserver (22) einen Zugriff auf den Heimautomatisierungsserver über das Weiterverkehrsnetz ermöglicht.

13. System mit einem zentralen Konfigurationsserver nach Anspruch 12 und einem Heimautomatisierungsserver nach Anspruch 10.

## Claims

1. Method for establishing an access authorisation to a home automation server (22) by means of a central configuration server (30) via a wide area network (28), comprising:
- storing at least a first tuple from an identifier which uniquely designates the home automation server (22) and a registration code in the central configuration server (30),
- receiving a second tuple from at least one identifier and a registration code on the central configuration server (30) from a user,
- comparing the first tuple with the second tuple by means of the central configuration server,
- storing an ownership relationship between the user and the home automation server (22) in the event of a positive comparison result such that, by means of the ownership relationship, an access authorisation to the home automation server (22) via the wide area network (28) is established.

2. Method according to claim 1, **characterised in that** the registration code is a random code which is generated in the home automation server (22) and **in that** the first tuple is transmitted from the home automation server (22) to the central configuration server (30) via the wide area network (28), or **in that** the registration code is a random code which is generated in the central configuration server (30) and is transmitted from the central configuration server (30) to the home automation server (22) via the wide area network (28).

3. Method according to claim 1 or claim 2, **characterised in that** the registration code is indicated on a display (22e) on the home automation server (22).

4. Method according to any one of claims 1 to 3, **characterised in that** a new registration code is generated each time the home automation server (22) is reset.

5. Method according to any one of claims 1 to 4, **characterised in that** a period of validity is associated with the registration code and **in that**, after the period of validity has expired, it is impossible to establish an access authorisation with the expired registration code or **in that** the registration code is marked as invalid after a single use.

6. Method according to any one of claims 1 to 5, **characterised in that**, using an access authorisation, a user account is created, whereby access limitations to the home automation server (22) being associated with a user account.

7. Method according to claim 6, **characterised in that** the user account is stored on the home automation server (22) and/or the central configuration server (30).

8. Method according to any one of claims 1 to 4, **characterised in that** the identifier is a serial number of the home automation server (22).

9. Method according to claim 1, **characterised in that** the registration code is a rolling code which is generated in the home automation server (22).

10. Home automation server with:
- a processor (22b),
- a first communication interface (22a) for communication with (28) a central configuration server (30) via a wide area network,
- a second communication interface (22a) for communication with local devices (2, 12), and
- an indication device (22e),
**characterised in that**
- the processor (22b) controls the indication device (22e) for displaying a registration code, and
- **in that** the processor (22b), in order to establish an access authorisation to the home automation server (22) via the wide area network (28), controls the first communication interface (22a) to transmit the registration code together with an identifier which uniquely identifies the home automation server (22) to the central configuration server (30) or to receive the registration code from the central configuration server (30).

11. Home automation server according to claim 10, **characterised in that** a new registration code is displayed each time the home automation server (22) is reset.

12. Central configuration server with:
- a memory (30d) which is configured to store at least a first tuple with an identifier which uniquely identifies the home automation server (22) and a registration code in the central configuration server (30),
- a communication interface (30b) which is configured to receive a second tuple from at least one identifier and a registration code on the central configuration server from a user,
- a processor (30e) which is configured to compare the first tuple with the second tuple, and
- the communication interface (30b) enabling access to the home automation server via the wide area network by means of an ownership relationship between the user and the home automation server (22).

13. System having a central configuration server according to claim 12 and a home automation server according to claim 10.

## Revendications

1. Procédé pour sécuriser la communication entre un server domotique (22) et un serveur de configuration central (30), par l'intermédiaire d'un réseau de zone étendue (28), lequel procédé comprend les étapes suivantes :
- enregistrement dans le server de configuration central (30) d'au moins un premier uplet, en provenance d'un identifiant qui caractérise de manière univoque le server domotique (22), et d'un code d'enregistrement,
- réception d'un deuxième uplet en provenance d'au moins un identifiant et d'un code d'enregistrement dans un server de configuration central (30) provenant d'un utilisateur,
- comparaison établie entre le premier uplet et le deuxième uplet par le server de configuration central,
- mémorisation d'une relation de propriété entre l'utilisateur et le server domotique (22) lors d'un résultat positif de la comparaison, de sorte qu'une autorisation d'accès au serveur domotique (22) soit produite au moyen de la relation de propriété par l'intermédiaire du réseau de zone étendue (28).

2. Procédé selon la revendication 1, **caractérisé en ce que** le code d'enregistrement est un code pseudo aléatoire qui est généré dans le server domotique (22), et que le premier uplet est transmis du server domotique (22) au server de configuration central (30) par l'intermédiaire du réseau de zone étendue (28), ou que le code d'enregistrement est un code pseudo aléatoire qui est généré dans le server de configuration central (30) et transmis du server de configuration central (30) au server domotique (22) par l'intermédiaire du réseau de zone étendue (28).

3. Procédé selon revendication 1 ou 2, **caractérisé en ce que** code d'enregistrement est affiché sur un écran de visualisation (22e) du serveur domotique (22).

4. Procédé selon l'une des revendications 1 à 3, **caractérisé en ce que**, lors de chaque réinitialisation du server domotique (22), un nouveau code d'enregistrement est généré.

5. Procédé selon l'une des revendications 1 à 4, **caractérisé en ce qu'**une durée de validité est allouée au code d'enregistrement et que la génération d'une autorisation d'accès au moyen du code d'enregistrement expiré est impossible après l'expiration de la durée de validité de celui-ci, ou que le code d'enregistrement est invalidé après une seule et unique utilisation.

6. Procédé selon l'une des revendications 1 à 5, **caractérisé en ce qu'**un compte d'utilisateur est généré à l'aide d'une autorisation d'accès, sachant que des limitations d'accès sont associées au compte d'utilisateur, sur le server domotique (22).

7. Procédé selon la revendication 6, **caractérisé en ce que** le compte d'utilisateur est mémorisé dans le server domotique (22) et / ou le server de configuration central (30).

8. Procédé selon l'une des revendications 1 à 4, **caractérisé en ce que** l'identifiant est un numéro de série du server domotique (22).

9. Procédé selon la revendication 1, **caractérisé en ce que** le code d'enregistrement est un code variable qui est généré dans le server domotique (22).

10. Server domotique qui comprend
- un processeur (22b),
- une première interface de communication (22a) pour communiquer avec un server de configuration central (30) par l'intermédiaire d'un réseau de zone étendue (28),
- une deuxième interface de communication (22a) pour communiquer avec des appareils locaux (2, 12), et
- un écran de visualisation (22e),
**caractérisé en ce que**
- le processeur (22b) commande l'écran de visualisation (22e) pour l'affichage d'un code d'enregistrement, et que
- le processeur (22b), pour la génération d'une autorisation d'accès au server domotique (22) par l'intermédiaire du réseau de zone étendue (28), commande la première interface de communication (22a) pour l'émission à destination du server de configuration central (30) du code d'enregistrement en commun avec un identifiant qui caractérise de manière univoque le server domotique (22), ou pour la réception du code d'enregistrement par le server de configuration central (30).

11. Server domotique selon la revendication 10, **caractérisé en ce que**, lors de chaque réinitialisation du server domotique (22), un nouveau code d'enregistrement est affiché.

12. Server de configuration central, avec
- une mémoire (30d), qui est aménagée pour mémoriser dans le server de configuration central (30) au moins un premier uplet d'un identifiant, qui caractérise de manière univoque le server domotique (22), et d'un code d'enregistrement,
- une interface de communication (30b) qui est aménagée pour la réception d'un deuxième uplet d'au moins un identifiant et un code d'enregistrement, dans le server de configuration central, par un utilisateur,
- un processeur (30e) qui est aménagé pour établir la comparaison entre le premier uplet et le deuxième uplet, et
- sachant que l'interface de communication (30b) permet, à l'aide d'une relation de propriété entre l'utilisateur et le server domotique (22), une communication avec le server domotique par l'intermédiaire du réseau de zone étendue.

13. Système comprenant un server de configuration central selon la revendication 12 et un server domotique selon la revendication 10.
